# EUROPEAN PATENT APPLICATION

(11) **EP 3 447 690 A1**
(43) Date of publication of application: **27.02.2019**
(21) Application number: 16898926.7
(22) Date of filing: 19.04.2016
(51) Int. Cl.: G06N 3/06

(54) **MAXOUT LAYER OPERATION APPARATUS AND METHOD**

(71) Applicant: Cambricon Technologies Corporation Limited, Beijing 100190 (CN)
(72) Inventor: HAN, Dong, Beijing 100190 (CN); GUO, Qi, Beijing 100190 (CN); CHEN, Tianshi, Beijing 100190 (CN); CHEN, Yunji, Beijing 100190 (CN)
(74) Representative: ABG Intellectual Property Law, S.L.
(86) International application number: PCT/CN2016/079637
(87) International publication number: WO 2017/181336

(57) **Abstract**

The present disclosure provides an operation device for maxout layer for performing maxout layer operations according to maxout layer operation instructions. Therein, the device comprises a maxout layer operation module coupled to a storage module. The maxout layer operation module comprises: a register unit for storing input data address of maxout layer, the input data address of maxout layer being a storage address of the input data of maxout layer in the storage module; a load/store unit, for obtaining corresponding input data of maxout layer from the storage module according to the input data address of maxout layer corresponding to the maxout layer operation instruction; a pruning unit, for compressing the input data of maxout layer preferentially stored by a feature in a feature dimension to obtain pruning data; and an operation unit, for performing corresponding operations on the pruning data according to the maxout layer operation instruction to obtain a maxout layer operation result.

## Description

### TECHNICAL FIELD

The present disclosure relates to an operation device and method for maxout layer for performing maxout layer operations according to maxout layer operation instructions.

### BACKGROUND

In the current computer field, more and more algorithms involve maxout layer operations. Taking artificial neural network algorithms as an example, many neural network algorithms contain a large number of maxout layer operations. In the neural network, it is often necessary to prune input data. For input data of maxout layer, the data is a three-dimensional data, which are the data of an abscissa, an ordinate, and a feature dimension. The pruning strategy of maxout operation is compressing the data in the feature dimension, that is *fⱼ* = max({*fᵢ*|*aⱼ* ≤ *i ≤ bⱼ*})*.* Therein, *fᵢ* is a value on the feature dimension corresponding to a point, *aⱼ* and *bⱼ* calibrate a range of selecting data in the feature dimension, and finally obtain a value *fⱼ*, that is, the feature dimension of a same point is divided into groups in a predetermined manner to obtain a maximum value in each group, as a new series of features of this point, so that relevant information between different feature layers can be obtained in the neural network, so as to improve the recognition ability of the neural network significantly. Therefore, the maxout layer operation has become an important issue that needs to be considered at the beginning of various operation devices.

In the prior art, a known solution for performing maxout layer operations is to use a general purpose processor. The method performs general purpose instructions through general purpose register files and general functional components to perform maxout layer operations. However, one of the disadvantages of this method is that the single general purpose processor is mostly used for scalar calculations, and the performance is lower when performing maxout layer operations. When multiple general purpose processors are used for parallel executions, mutual communication between the general purpose processors may become a performance bottleneck.

In another prior art, a graphic processing unit (GPU) is used to perform maxout layer operations of neural network in which the general purpose register files and the general stream processing unit are used to perform maxout layer operations by executing general SIMD instructions. However, in the above solutions, on-chip cache of the GPU is too small, and it is necessary to continuously perform off-chip data transfer when performing a large scale of maxout layer operations, and off-chip bandwidth becomes a main performance bottleneck.

In another prior art, a customized operation device for maxout layer is used to perform maxout layer operations of neural network, in which a customized register file and a customized processing unit are used for maxout layer operations. However, the existing customized operation device for maxout layer is limited by register files and cannot flexibly support maxout layer operations with different lengths.

In conclusion, the existing processors are unable to perform efficient maxout layer operations, whether they are on-chip multi-core general purpose processors, inter-chip interconnected general purpose processors (single-core or multi-core), or inter-chip interconnected graphic processors. These prior art have problems of a large amount of codes, limited by inter-chip communication, insufficient on-chip cache, and unenough flexible scale for supporting maxout layer when dealing with the maxout layer operations.

### SUMMARY

### (1) Technical problems to be solved

The present disclosure aims to provide an operation device and method for maxout layer, which can solve the problems in the prior art that are limited by inter-chip communication, insufficient on-chip cache, and unenough flexible length for supporting maxout layers.

### (2) Technical solutions

The present disclosure provides an operation device for maxout layer for performing maxout layer operations according to maxout layer operation instructions. Therein, the device comprises a maxout layer operation module coupled to a storage module. The maxout layer operation module comprises: a register unit for storing input data address of maxout layer, the input data address of maxout layer is a storage address of the input data of maxout layer in the storage module; a load/store unit, for obtaining corresponding input data of maxout layer from the storage module according to the input data address of maxout layer corresponding to the maxout layer operation instruction; a pruning unit, for compressing the input data of maxout layer preferentially stored by a feature in a feature dimension to obtain pruning data; and an operation unit for performing corresponding operations on the pruning data according to the maxout layer operation instruction to obtain a maxout layer operation result.

Optionally, the device further comprises the storage module.

Optionally, the maxout layer operation module further comprises a data conversion unit that converts data preferentially stored in an ordinate or an abscissa into a converted data preferentially stored by the feature.

Optionally, the device further comprises an instruction processing module, for obtaining the maxout layer operation instruction from an instruction storage device, and sending the maxout layer operation instruction to the maxout layer operation module.

Optionally, the instruction processing module comprises:
an instruction fetching module, for fetching the maxout layer operation instruction from the instruction storage device;
a decoding module, for decoding the obtained maxout layer operation instruction;
a storage queue, for sequentially storing the decoded maxout layer operation instruction;
an instruction register, for storing address data required by the maxout layer operation instruction;
a dependency processing unit; and
an instruction queue,
wherein, the dependency processing unit determines whether the maxout layer operation instruction and a previous maxout layer operation instruction access a same storage space before providing the maxout layer operation instruction to the maxout layer operation module, and if yes, instructs the instruction queue to store the maxout layer operation instruction, and then provides the maxout layer operation instruction to the maxout layer operation module after completing execution of the previous maxout layer operation instruction, otherwise, directly provides the maxout layer operation instruction to the maxout layer operation module.

Optionally, the storage module is further configured to store the maxout layer operation result.

Optionally, the device further comprises an input and output module, for the storage module reading input data of maxout layer from an external storage device and writes the maxout layer operation result to the external storage device.

Optionally, the storage module is a scratchpad memory.

Optionally, the maxout layer operation instruction comprises an operation code and at least five operation fields, therein, the operation code is configured to indicate a function of maxout layer operation instruction, and the five operation fields respectively represent a start address of input data, a data length of the input data, a start address of output data, a data length of the output data, and a feature selection range for maxout layer operation.

Optionally, the operation device for maxout layer is a multi-pipeline stage structure, therein, the data conversion unit is at a first pipeline stage, the pruning unit is at a second pipeline stage, and the operation unit is at a third pipeline stage.

The present disclosure also provides an operation method for maxout layer using an operation device for maxout layer, comprising:
S1, the instruction fetching module fetching the maxout layer operation instruction, and transmitting the maxout layer operation instruction to the decoding unit;
S2, the decoding module decoding the obtained maxout layer operation instruction, and sending the maxout layer operation instruction to the storage queue;
S3, obtaining data information in the instruction register corresponding to the maxout layer operation instruction to fill the maxout layer operation instruction, the data information comprising a start address of input data of maxout layer, a length of the input data of maxout layer, and a number of feature layers of the input data of maxout layer, a size of single feature layer of the input data of maxout layer, a size of feature layer for maxout operation, a start address of output data of maxout layer, a length of output data of maxout layer;
S4, after obtaining required data information, sending the maxout layer operation instruction to the dependency processing unit, the dependency processing unit determining whether the instruction and a previous instruction that has not been executed yet access a same storage space, and if yes, the maxout layer operation instruction waiting in the instruction queue until the instruction and the instruction that has not been executed do not access the same storage space, otherwise, sending the maxout layer operation instruction;
S5, sending the maxout layer operation instruction to the maxout layer operation module, the maxout layer operation module obtaining required input data of maxout layer from the storage module, and completing corresponding operations of maxout layer operation instruction;
S6, after completing the operations, writing the result back to a specified address of the storage module, and submitting the instruction in the dependency processing unit.

### (3) Advantageous effects

The operation device for maxout layer provided by the present disclosure temporarily stores input and output data of maxout layer involved in calculation on a storage module, such as temporarily stores in the scratchpad memory, such that that the operating process of maxout layer can support data of different widths more flexibly and effectively, and improve execution performance of a large number of computing tasks of maxout layer of neural network. In the present disclosure, the instruction set is convenient to use, and the length of the maxout layer supported is flexible.

### BRIEF DESCRIPTION OF THE DRAWINGS

FIG. 1 is a schematic diagram of a structure of an operation device for maxout layer according to one embodiment of the present disclosure.
FIG. 2 is a schematic diagram of a format of an instruction set provided by the present disclosure.
FIG. 3 is a schematic diagram of a structure of an operation device for maxout layer according to another embodiment of the present disclosure.
FIG. 4 is a flowchart of executing operations of maxout layer by an operation device for maxout layer according to one embodiment of the present disclosure.

### EXAMPLES

According to the following detailed description of the exemplary embodiments of the present disclosure with reference to the accompanying drawings, other aspects, advantages, and salient features of the present disclosure will become apparent to those skilled in the art.

In the present disclosure, the terms "include" and "contain" and their derivatives are intended to be inclusive and not limiting; the term "or" is inclusive, meaning and/or.

In the present specification, the following various embodiments for describing the principles of the present disclosure are merely illustrative and should not be construed as limiting the scope of the present disclosure in any way. The following description of the present disclosure with reference to the accompanying drawings is intended to assist the understanding of the exemplary embodiments limited by the claims and the equivalent thereof. The following description includes numerous specific details to assist in understanding, but these details should be considered as merely exemplary. Accordingly, it will be appreciated by those skilled in the art that various changes and modifications of the embodiments described herein may be made without departing from the scope and spirit of the present disclosure. In addition, descriptions of well-known functions and constructions are omitted for clarity and conciseness. In addition, the same reference numerals are used throughout the drawings for similar functions and operations.

According to the maxout operation of the embodiment of the present disclosure, the neuron vector of the input layer is separated into a plurality of groups, and the different feature layers of the same input point in each group take the maximum value as the output of the point.

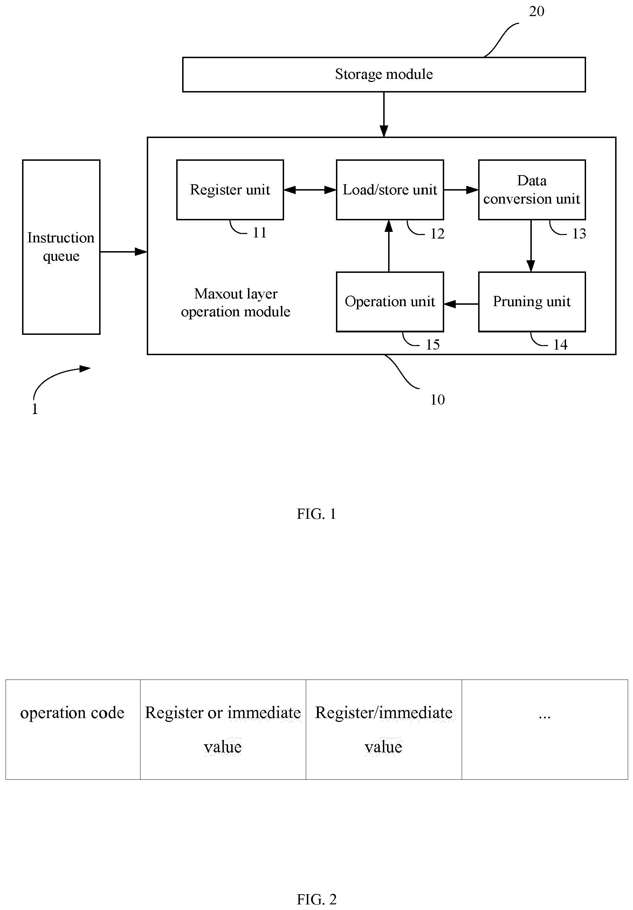

FIG. 1 schematically illustrates a block diagram of an operation device for maxout layer 1 according to one embodiment of the present disclosure. Therein, the modules can be implemented by hardware circuits such as, but is not limited to, FPGA, CGRA, application specific integrated circuit ASIC, analog circuit, memristor, and the like.

As shown in FIG. 1, the operation device for maxout layer 1 includes a maxout layer operation module 10. According to one embodiment of the present disclosure, the operation device for maxout layer 1 may further include a storage module 20. The maxout layer operation module 10 is coupled to the storage module 20. The storage module 20 is configured to store input data of maxout layer. In an implementation manner, the storage module 20 can be a scratchpad memory, and can support input data and output data of maxout layer with different sizes. According to one embodiment of the present disclosure, the necessary operational data of maxout layer is temporarily stored in the scratchpad memory, so that the operation device can flexibly and efficiently support data of different widths during the maxout layer operation, and improve the execution performance of a large number of operation task of maxout layer operation of neural network.

The maxout layer operation module 10 includes a register unit 11, a load/store unit 12, a data conversion unit 13, a pruning unit 14 and a nonlinear operation unit 15.

The register unit 11 is configured to store input data address of maxout layer. Therein, the input data address of maxout layer is the storage address of the input data of maxout layer in the storage module 20. In another embodiment, the register unit 11 may include a scalar register file to provide scalar registers required for the operation. The scalar register not only stores the input data address of maxout layer, but also stores scalar data. When it is involved in operations of repeatedly using the input data of maxout layer, the maxout layer operation module 10 can not only obtain the input data address of maxout layer from the register unit 11, but also obtain the corresponding loaded input data of maxout layer from the register unit 11.

The maxout layer operation module 10 obtians the maxout layer operation instruction. Then, the load/store unit 12 obtains corresponding input data of maxout layer in the storage module 20 according to the immediate value of the operation instruction or the input data address of maxout layer obtained from the register unit 11 based on the operation instruction. According to one embodiment of the present disclosure, the load/store unit 12 may store the input data of maxout layer in the register unit 11. When it is involved in operations of repeatedly using the input data of maxout layer, the maxout layer operation module 10 can obtain the corresponding input data of maxout layer that has been loaded from the register unit 11.

Then, the data conversion unit 13, the pruning unit 14 and the nonlinear operation unit 15 perform maxout layer operation using the obtained input data of maxout layer according to the maxout layer operation instruction, to obtain a maxout layer operation result, and store the maxout layer operation result in the storage module 20. The operation device for maxout layer 10 is a multi-pipeline stage structure, therein, the data conversion unit 13 is at a first pipeline stage, the pruning unit 14 is at a second pipeline stage, and the nonlinear operation unit 15 is at a third pipeline stage. These units are arranged in different pipeline stages, when sequential order of successive serial multiple maxout layer operation instructions is consistent with sequential order of pipeline stages of corresponding units, operations as demanded by the serial multiple maxout layer operation instructions can be implemented more efficiently.

Specifically, the data conversion unit 13 converts the data preferentially stored by an ordinate or an abscissa in each input data of maxout layer into the converted data preferentially stored by a feature (if the data itself is stored with the feature preferentially, the conversion operation is not needed). The manner in which the data of maxout layer is preferentially stored by feature is known, and will not be described here.

For each input data of maxout layer preferentially stored by the feature, the pruning unit 14 compresses it in the feature dimension to obtain pruning data. Specifically, the pruning unit 14 obtains a maximum value of each of the feature groups of the input data of maxout layer as the pruning data corresponding to the converted data. For example, the converted data includes features {f1, f2, f3}, {f4, f5, f6}, {f7, f8, f9} that have been divided into three groups, taking the maximum value f2, f5, f9 of each group as its pruning data. This grouping way is merely exemplary, and different grouping ways can be set in advance according to actual needs.

The operation unit 15 performs a corresponding operation on the pruning data outputted from the pruning unit 14 according to the operation instruction. According to one embodiment of the present disclosure, the operation may be a non-linear operation such as a sigmoid operation, a TanH operation, a relu operation, or a softmax operation. Then, the operation unit 15 returns the operation result to the load/store unit 12, and the load/store unit 12 can write the operation result into the storage module 20.

FIG. 2 is a schematic diagram of a format of an instruction set provided by the present disclosure. As shown in FIG. 2, the maxout layer operation instruction includes an operation code and at least five operation fields, and the five operation fields respectively represent a start address of input data, a data length of the input data, a start address of output data, a data length of the output data, and a feature selection range for the maxout layer operation. The operation code is used to indicate a function of maxout layer operation instruction, and the operation device for maxout layer can perform different maxout layer operations by identifying the operation code. The operation field is used to indicate the data information of maxout layer operation instruction, wherein the data information can be an immediate value or a register serial number. For example, when it is needed to obtain the input data of maxout layer, according to the register number, the start address of the input data of maxout layer and the length of the input data of maxout layer can be obtained in the corresponding register, and then the input data of maxout layers stored in the corresponding address can be obtained according to the start address of the input data of maxout layer and the length of the input data of maxout layer. The number of feature layers to be integrated required by the maxout layer operation can be obtained from the immediate value in the operation field. The start address and the data length outputted by the maxout layer operation result are also obtained from the operation field.

The instruction set includes operation instructions of input data of maxout layer with different functions, including a maxout layer operation instruction for preferentially storing data by a format of feature and/or a maxout layer operation instruction for preferentially storing data by a format of image ordinate or abscissa.

The maxout layer operation module 10 obtains the input data of maxout layer with specified size from the specified address of the storage module 20 or the register unit 11 according to the maxout layer operation instruction for preferentially storing data by the format of feature. In the maxout layer operation module 10, the input data of maxout layer is pruned and the corresponding operation is performed, and the calculation result is written back to the specified address of the storage module 20.

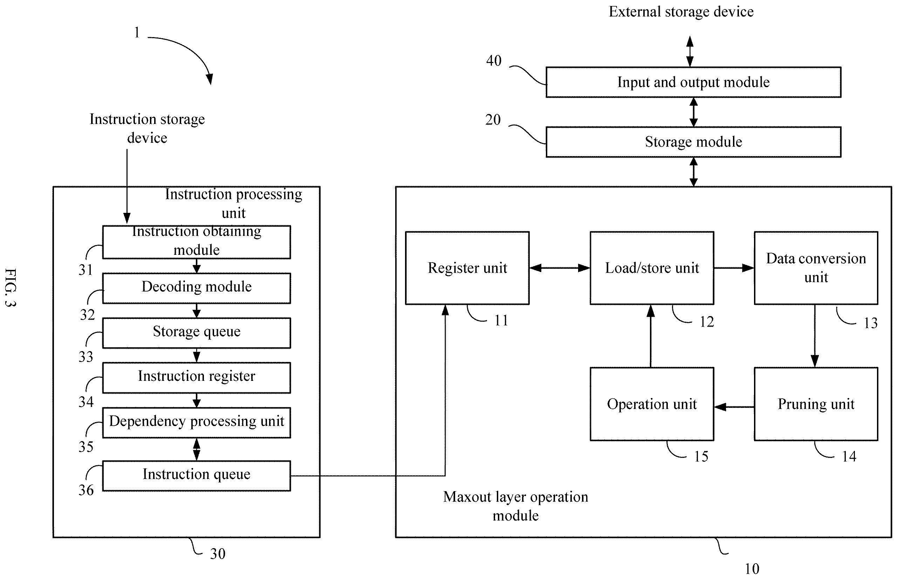

The maxout layer operation module 10 obtains the input data of maxout layer with specified length from the specified address of the storage module 20 or the register unit 11 according to the maxout layer operation instruction for preferentially storing data by a format of image ordinate or abscissa. In the operation device of maxout layer, the data is firstly converted to the the data preferentially stored by feature at the first pipeline stage, then the input data of maxout layer is perfromed to prune and corresponding operations, and then the calculation result is written back to the specified address of the storage module 20. FIG. 3 is a schematic diagram of a structure of an operation device for maxout layer 1 according to another embodiment of the present disclosure. As shown in FIG. 3, in addition to the maxout layer operation module 10 and the storage module 20 shown in FIG. 1, the maxout layer operation device 1 further includes an instruction processing module 30 for obtaining the maxout layer operation instruction from an instruction storage device (not shown), and process the maxout layer operation instruction, and then provide the processed maxout layer operation instruction to the maxout layer operation module 10. The instruction processing module 30 includes:
an instruction fetching module 31, for fetching the maxout layer operation instruction from the instruction storage device;
a decoding module 32, for decoding the obtained maxout layer operation instruction;
a storage queue 33, for sequentially storing the decoded maxout layer operation instruction;
an instruction register 34, for storing address data required by the instruction;
a dependency processing unit 35; and
an instruction queue 36.

The dependency processing unit 35 is configured to determine whether the maxout layer operation instruction and a previous maxout layer operation instruction access a same storage space before providing the maxout layer operation instruction to the maxout layer operation module 10, if yes, instructs the instruction queue 36 to store the maxout layer operation instruction, and provides the maxout layer operation instruction to the corresponding unit of maxout layer operation module 10 after completing the execution of the previous maxout layer operation instruction; otherwise, instructs the instruction queue 36 to directly provide the maxout layer operation instruction to the corresponding unit of maxout layer computing module 10. Specifically, when the maxout layer operation instruction accesses the storage module 20, the previous and next instructions may access a same block of storage space, and this case is called that there exists a dependency relationship between the data of the previous and next instructions. In order to ensure the correctness of the execution result of the instruction, if the current instruction is detected to have a dependency relationship with the data of the previous instruction, the instruction must wait in the instruction queue 36 until the dependency is eliminated. The instruction is also cached in the dependency processing unit 35 during execution. When the instruction is executed, if the instruction is also the earliest one of the unsubmitted instructions in the dependency processing unit 35, the instruction will be submitted. Once submitted, the status change of the device caused by the operations performed of the instruction cannot be cancelled.

According to one embodiment of the present disclosure, the operation device for maxout operation 1 further includes an input and output module 40 that can transfer input and output data of maxout layer between the storage module 20 and an external storage device (not shown). For example, the input and output module 40 can be used by the storage module to read the input and output data of maxout layer from the external storage device and write the maxout layer operation result to the external storage device.

According to one embodiment of the present disclosure, the instruction set used in the device of the present disclosure adopts an instruction with fixed length, that is, the length of each instruction is an uniform size.

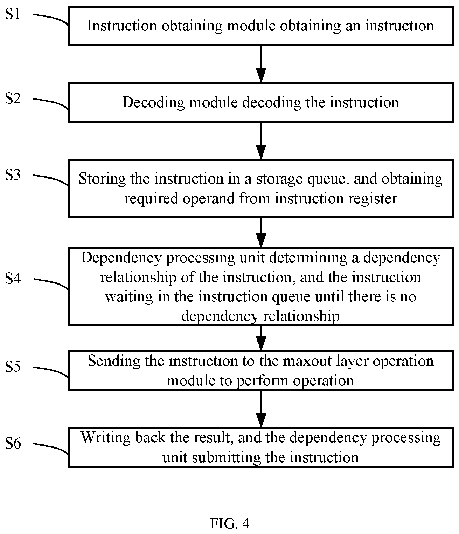

FIG. 4 is a flowchart of an operation device of maxout layer for performing maxout layer operations according to one embodiment of the present disclosure. As shown in FIG. 4, the process of executing the maxout layer operation instruction includes:
S1, the instruction obtaining unit obtains the maxout layer operation instruction, and sends the instruction to the decoding unit.
S2, the decoding unit decodes the instruction and sends the instruction to the storage queue.
S3, the instruction register fills the instruction. Specifically, the data information corresponding to the five operation fields (the five operation fields respectively represent a start address of input data, a data length of the input data, a start address of output data, a data length of the output data, and a feature selection range for the maxout layer operation (that is, how many feature data is used to get one feature data)) in the instruction from the instruction register is obtained to fill with the maxout layer operation instruction. The data information includes the start address of input data, the data length of the input data, and the number of feature layers of the input data, the size of single feature layer of the input data, the size of feature layer for maxout layer operation, the start address of output data, and the length of output data.
S4, after obtaining the required data information, the instruction is sent to the dependency processing unit. The dependency processing unit determines whether the instruction has a dependency relationship on the data with the previous instruction that has not finished executing. This instruction needs to wait in the instruction queue until it has no dependency relationship on the data with the previous instruction that has not finished executing.
S5, after the dependency relationship does not exist, the maxout layer operation instruction is sent to the maxout layer operation module. The maxout layer operation module takes out the required input data of maxout layer from the storage module according to the address and length of the required data, and then completes operations corresponding to the instructions in the maxout layer unit. According to one embodiment of the present disclosure, the instruction corresponding operation includes data conversion (this operation is performed when the input data is in the abscissa or ordinate preferentially format, the operation is omitted when the input data is in the feature preferentially format), pruning, and operations corresponding to the instruction. According to one embodiment of the present disclosure, the operation may be a non-linear operation such as a sigmoid operation, a TanH operation, a relu operation, or a softmax operation.
S6, after the operation is completed, the result is written back to the specified address of the storage module, and the instruction in the dependency processing unit is submitted.

The operation device for maxout layer of the present disclosure and each module and unit therein can be implemented by software, hardware, or firmware. These devices, modules, units may be implemented together or separately and in communication or interaction with one another. For example, a specific integrated circuit can be used for integrated implementation. Alternatively, some of the modules, units may be implemented as specific integrated circuits or programmable devices with computer program code embodied, and some modules, units are implemented as computer program code that general purpose operation devices run stored in a storage device. For example, some modules, units, etc. (such as data conversion units) may be implemented to implement conversion of data by software, while internal memory units may be implemented by register banks or cache units, and the like.

In conclusion, the present disclosure provides an operation device for maxout layer, which can well solve the problem that more and more algorithms in the current computer field contain a large number of maxout layer operations. Compared to existing conventional solutions, the present disclosure can be used convenient, have supportable maxout layer scale and sufficient on-chip cache. The present disclosure can be applied to a variety of computational tasks including a large number of maxout layer operations, including computational methods such as inverse training and forward prediction of artificial neural network algorithms which are currently excellent.

The specific embodiments of the present disclosure have been described in detail, and are not intended to limit the present disclosure. Any modifications, equivalent substitutions, improvements, etc., made within the spirit and scope of the present disclosure are intended to be included within the scope of the present disclosure.

## Claims

1. An operation device for maxout layer, configured for performing maxout layer operations according to maxout layer operation instructions, wherein, the device comprises a maxout layer operation module coupled to a storage module, the maxout layer operation module comprises:
a register unit, for storing input data address of maxout layer, the input data address of maxout layer being a storage address of the input data of maxout layer in the storage module;
a load/store unit, for obtaining corresponding input data of maxout layer from the storage module according to the input data address of maxout layer corresponding to the maxout layer operation instruction;
a pruning unit, for compressing the input data of maxout layer preferentially stored by a feature in a feature dimension to obtain pruning data; and
an operation unit, for performing corresponding operations on the pruning data according to the maxout layer operation instruction to obtain a maxout layer operation result.

2. The operation device for maxout layer according to claim 1, wherein, the device further comprises the storage module.

3. The operation device for maxout layer according to claim 1, wherein, the maxout layer operation module further comprises a data conversion unit that converts data preferentially stored in an ordinate or an abscissa into a converted data preferentially stored by the feature.

4. The operation device for maxout layer according to claim 1, wherein, the device further comprises an instruction processing module, for obtaining the maxout layer operation instruction from an instruction storage device, and sending the maxout layer operation instruction to the maxout layer operation module.

5. The operation device for maxout layer according to claim 4, wherein, the instruction processing module comprises:
an instruction fetching module, for fetching the maxout layer operation instruction from the instruction storage device;
a decoding module, for decoding the obtained maxout layer operation instruction;
a storage queue, for sequentially storing the decoded maxout layer operation instruction;
an instruction register, for storing data information required by the maxout layer operation instruction;
a dependency processing unit; and
an instruction queue,
wherein, the dependency processing unit determines whether the maxout layer operation instruction and a previous maxout layer operation instruction access a same storage space before providing the maxout layer operation instruction to the maxout layer operation module, and if yes, instructs the instruction queue to store the maxout layer operation instruction, and then provides the maxout layer operation instruction to the maxout layer operation module after completing execution of the previous maxout layer operation instruction, otherwise, directly provides the maxout layer operation instruction to the maxout layer operation module.

6. The operation device for maxout layer according to claim 1, wherein, the storage module is further configured to store the maxout layer operation result.

7. The operation device for maxout layer according to claim 1, wherein, the device further comprises
an input and output module, for the storage module reading input data of maxout layer from an external storage device and writes the maxout layer operation result to the external storage device.

8. The operation device for maxout layer according to claim 1, wherein, the storage module is a scratchpad memory.

9. The operation device for maxout layer according to claim 1, wherein, the maxout layer operation instruction comprises an operation code and at least five operation fields, wherein, the operation code is configured to indicate a function of maxout layer operation instruction, and the five operation fields respectively represent a start address of input data, a data length of the input data, a start address of output data, a data length of the output data, and a feature selection range for maxout layer operation.

10. The operation device for maxout layer according to claim 3, wherein, the operation device for maxout layer is a multi-pipeline stage structure, wherein, the data conversion unit is at a first pipeline stage, the pruning unit is at a second pipeline stage, and the operation unit is at a third pipeline stage.

11. An operation method for maxout layer using an operation device for maxout layer according to claim 5, comprising:
S1, the instruction fetching module obtaining the maxout layer operation instruction, and transmitting the maxout layer operation instruction to the decoding unit;
S2, the decoding module decoding the obtained maxout layer operation instruction, and sending the maxout layer operation instruction to the storage queue;
S3, obtaining data information in the instruction register corresponding to the maxout layer operation instruction to fill the maxout layer operation instruction, the data information comprising a start address of input data of maxout layer, a length of the input data of maxout layer, and a number of feature layers of the input data of maxout layer, a size of single feature layer of the input data of maxout layer, a size of feature layer for maxout operation, a start address of output data of maxout layer, a length of output data of maxout layer;
S4, after obtaining required data information, sending the maxout layer operation instruction to the dependency processing unit, the dependency processing unit determining whether the instruction and a previous instruction that has not been executed yet access a same storage space, and if yes, the maxout layer operation instruction waiting in the instruction queue until the instruction and the instruction that has not been executed do not access the same storage space, otherwise, sending the maxout layer operation instruction;
S5, sending the maxout layer operation instruction to the maxout layer operation module, the maxout layer operation module obtaining required input data of maxout layer from the storage module, and completing corresponding operations of maxout layer operation instruction;
S6, after completing the operations, writing the result back to a specified address of the storage module, and submitting the instruction in the dependency processing unit.
